(19) Europäisches Patentamt
European Patent Office
Office européen des brevets

(11) **EP 2 629 186 A1**

(12) **EUROPÄISCHE PATENTANMELDUNG**

(43) Veröffentlichungstag:
**21.08.2013 Patentblatt 2013/34**

(51) Int Cl.:
*G06F 3/048* (2013.01)   *G06F 3/045* (2006.01)

(21) Anmeldenummer: **12155574.2**

(22) Anmeldetag: **15.02.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Jöhnßen, Oliver**
**91058 Erlangen (DE)**
• **Zintel, Andreas**
**90478 Nürnberg (DE)**

(54) **Handsteuergerät zur Steuerung einer industriellen Vorrichtung und Verfahren zum Verändern eines Vorgabewertes**

(57)   Die Erfindung betrifft Handsteuergerät (1) zur Steuerung einer industriellen Vorrichtung (2), umfassend ein berührungsempfindliches Bedien- und Beobachtungsgerät (11) mit einem Berührungssensor (12), wobei der Berührungssensor (12) dazu ausgestaltet ist eine Position (x,y) eines Bedienobjektes (20) auf dem Berührungssensor (12) zu erkennen, wobei der Berührungssensor (12) weiterhin dazu ausgestaltet ist zusätzlich zu der Position (x,y) einen Druck (p) des Bedienobjektes (20) auf den Berührungssensor (12) an dem Ort der Position (x,y) zu erkennen, wobei eine mit dem Berührungssensor (12) verbundene Auswerteeinheit (13) dazu ausgestaltet ist ein dem Druck (p) proportionalen Strom (I) zu messen, und weiterhin dazu ausgestaltet ist den gemessenen Strom (I) mit einem ersten Grenzwert (G1) zu vergleichen.

## FIG 1

EP 2 629 186 A1

**Beschreibung**

Die Erfindung betrifft ein Handsteuergerät zur Steuerung einer industriellen Vorrichtung, umfassend ein berührungsempfindliches Bedien- und Beobachtungsgerät mit einem Berührungssensor, wobei der Berührungssensor dazu ausgestaltet ist eine Position eines Bedienobjektes auf den Berührungssensor zu erkennen.

Des Weiteren betrifft die Erfindung ein Verfahren zum Verändern eines Vorgabewertes, welcher in einem Anzeigefeld eines berührungsempfindlichen Bedien- und Beobachtungsgerät mit einem Berührungssensor angezeigt wird, und über ein Bedienfeld veränderbar ist.

Bei Bedien- und Beobachtungsgeräten, wie sie in der Automatisierungstechnik zur Steuerung von industriellen Anlagen eingesetzt werden, werden häufig sogenannte Touch-Screens eingesetzt. Ein Touch-Screen ist ein mit einem Display kombinierter Berührungssensor. Zur Steuerung der industriellen Anlagen werden auf dem Touchscreen Bedienobjekte und Anzeigeobjekte projektiert. Es entsteht somit ein HMI-System "Human Machine Interface". Dieses HMI-System ist sodann ein kombiniertes Ein- und Ausgabegerät, bei dem durch Berührung von Teilen eines Bildes ein Programmablauf der industriellen Anlage direkt gesteuert werden kann.

Bekannt ist bereit, dass zur Manipulation eines Wertes in mehreren, unterschiedlichen Stufen auf dem HMI-System mehrere Bedienfelder bzw. Schaltflächen projektiert werden müssen. Hier gibt es z.B. eine Schaltfläche für Vorwärts langsam, eine Schaltfläche für Vorwärts schnell, eine Schaltfläche für Rückwärts langsam, eine Schaltfläche für Rückwärts schnell oder für ein Verändern von Werten müssen in einer Auswahlbox entsprechende Schaltflächen oft und schnell hintereinander gedrückt werden, um den Wert in beispielsweise großen Schrittweiten zu verändern. Dadurch entsteht der Nachteil, dass das projektierte Bild auf dem HMI-System überladen mit Schaltflächen ist. Dies macht das Bild des HMI-Systems unübersichtlich. Auch ist es von Nachteil, dass beim Verändern eines Wertes durch eine Schaltfläche, wenn diese Schaltfläche dauernd berührt wird, der Wert sich nur mit einer Geschwindigkeit verändern lässt.

Der Erfindung liegt die Aufgabe zugrunde, ein Verfahren bzw. ein Handsteuergerät zum Einsatz als ein HMI-System anzugeben, welches eine Bedienung bzw. Steuerung einer industriellen Vorrichtung erleichtert.

Die Aufgabe wird für das eingangs genannte Handsteuergerät dadurch gelöst, dass der Berührungssensor weiterhin dazu ausgestaltet ist zusätzlich zu der Position einen Druck des Bedienobjektes auf den Berührungssensor an dem Ort der Position zu erkennen, wobei eine mit dem Berührungssensor verbundene Auswerteeinheit dazu ausgestaltet ist ein dem Druck proportionalen Strom zu messen, und weiterhin dazu ausgestaltet ist, den gemessenen Strom mit einem ersten Grenzwert zu vergleichen. Nun ist es möglich, dass bei Erkennen einer Berührung des Berührungssensor nicht nur die berührte Position ermittelt wird sondern auch der Druck auf diese Position. Ist das Bedien- und Beobachtungsgerät mit dem Berührungssensor als beispielsweise ein resistives Touch-Display ausgestaltet und ist auf diesen Touch-Display eine entsprechend projektierte Schaltfläche bedienbar, so kann sie so projektiert sein, dass bei einer einfachen Berührung der Schaltfläche ein Wert mit einer ersten Schrittweite verändert wird und wenn der Druck auf dieser Schaltfläche ansteigt der zu verändernde Wert mit einer zweiten Schrittweite verändert wird.

Weiterhin ist es vorteilhaft, dass die Auswerteeinheit dazu ausgestaltet ist, den gemessenen Strom mit einem zweiten Grenzwert zu vergleichen.

Eine weitere vorteilhafte Ausgestaltung sieht vor, dass das berührungsempfindliche Bedien- und Beobachtungsgerät ein Bedienfeld aufweist, welches dazu ausgestaltet ist bei einer Berührung mit einem Druck auf das Bedienobjekt, den Strom an die Auswerteeinheit weiterzuleiten, wobei die Auswerteeinheit weiterhin dazu ausgestaltet ist über einen Strom, welcher unterhalb des ersten Grenzwertes liegt, einen in einem Anzeigefeld angezeigten Vorgabewert um eine erste Schrittweite zu erhöhen, und bei einem Strom, welcher oberhalb des ersten Grenzwertes liegt, den Vorgabewert um eine zweite Schrittweite zu erhöhen. Durch die Variation der Druckkraft mit z.B. einem Finger der menschlichen Hand auf einen Touch-Screen kann die gewünschte Schrittweite der Veränderung des Vorgabewertes variiert werden, z.B. wird ein zunächst starker Druck ausgeübt um in die Nähe des gewünschten einzustellenden Wertes zu gelangen, und daraufhin wird ein leichter Druck ausgeübt, wodurch eine Werteveränderung reduziert wird und sich ein Bediener einer industriellen Anlage so an seinen einzustellenden Zielwert herantasten kann.

Die eingangs genannte Aufgabe wird auch durch ein Verfahren zum Verändern eines Vorgabewertes, welcher in einem Anzeigefeld eines berührungsempfindlichen Bedien- und Beobachtungsgerät mit einem Berührungssensor angezeigt wird, gelöst. Hierzu ist über ein Bedienfeld der Vorgabewert veränderbar und es werden folgende Schritte ausgeführt:

a) Prüfen, ob an einer Position eine Berührung des Berührungssensor mit einem Bedienobjekt vorliegt, wobei die Position im Wesentlichen mit Positionskoordinaten des Bedienfeldes, welches auf dem berührungsempfindlichen Bedien- und Beobachtungsgerät angezeigt wird, übereinstimmt,

b) wenn eine Berührung mit dem Bedienobjekt vorliegt, dann wird durch eine Strommessung ermittelt, wie stark der Druck des Bedienobjektes an der Position auf das Bedienfeld ist, wobei die Druckstärke einen Strom proportional ist,

c) Vergleichen des gemessenen Stromes mit einem ersten Grenzwert,

d) bei Überschreiten des ersten Grenzwertes wird eine erste Aktion ausgelöst.

Eine weitere Vereinfachung einer Bedienung eines HMI-Systems wird durch folgende weitere Verfahrensschritte erreicht:

c1) Vergleichen des gemessenen Stromes mit einem zweiten Grenzwert,

d1) bei Überschreiten des zweiten Grenzwertes wird eine zweite Aktion ausgelöst.

Weiterhin ist es vorteilhaft, wenn die Aktionen sich auf die Veränderung des Vorgabewertes unterschiedlich auswirken.
Verfahrensgemäß ist es vorgesehen, dass als Vorgabewert ein Prozesswert zum Steuern einer industriellen Vorrichtung genutzt wird und die erste Aktion den Prozesswert mit einer ersten Schrittweite ändert und mit der zweiten Aktion den Prozesswert mit einer zweiten Schrittweite ändert.
In einer alternativen Durchführung des Verfahrens wird als Vorgabewert ein die Sicherheit beeinflussender Schaltbefehl für die industrielle Vorrichtung verwendet, wobei um den Schaltbefehl von ungültig auf gültig zu verändern zunächst das Bedienobjekt derart berührt wird, dass die erste Aktion ausgelöst wird und daraufhin das Bedienobjekt nochmals berührt wird und dabei zusätzlich der Druck derart gesteigert wird, dass die zweite Aktion ausgelöst wird, wobei bei einem Vergleichen des gemessenen Stromes mit dem zweiten Grenzwert ein Überschreiten des zweiten Grenzwertes erkannt wird und der Schaltbefehl auf gültig gesetzt wird. Hiermit kann über dieses Verfahren ein unbeabsichtigtes Auslösen einer Funktion bzw. ein sicherheitsgerichtetes Bedienen von einer Maschine erreicht werden. Bei einem Druck auf das Bedienfeld oder auf eine Schaltfläche für sicherheitskritische Aktionen wertet der Touch-Screen des HMI-Systems die Druckstärke des Bedienobjektes z.B. eines Fingers einer menschlichen Hand, auf den Touch-Screen aus. Passiert der Verlauf der Druckstärke beispielsweise bewusst zwei Schwellwerte, wird die eigentliche sicherheitsgerichtete Aktion ausgelöst. Dazu sollte diese Schaltfläche mit zwei Grenzwerten oder Schwellwerten projektiert werden.
Vorteilhaft ist es, wenn dem ersten Grenzwert ein Strom zugeordnet wird, welcher einen minimal erkennbaren Druck entspricht und dem zweiten Grenzwert ein Strom zugeordnet wird, welcher einem maximalen erkennbaren Druck entspricht, wobei Druckwerte bzw. Stromwerte, welche zwischen dem minimalen Druck und dem maximalen Druck liegen normiert werden und mit den normierten Werten entsprechende Schrittweiten für die Veränderung des Vorgabewertes bereitgestellt werden, dabei liegen die entsprechenden Schrittweiten zwischen der ersten und der zweiten Schrittweite.
Beispielsweise könnte man auf ein Maximum normieren, d. h. es wird auf den maximal erkennbaren Druck normiert:

$$Schrittweite, f(p) = Schrittweite_{\max} \cdot \frac{I, f(p)}{I_{\max}}$$

Ein Ausführungsbeispiel ist mit der Zeichnung wiedergegeben. Es zeigen:

FIG 1    ein Handsteuergerät zur Steuerung einer industriellen Vorrichtung,

FIG 2    einen Berührungssensor, welcher einen Druck auswertet,

FIG 3    einen Verlauf einer Stromstärke bei ansteigendem Druck,

FIG 4    einen Verlauf einer Stromstärke mit verschiedenen Grenzwerten und zugehörigen Pegelstufen und

FIG 5    eine Auswerteeinheit zum Messen des Stromes und zum Vergleich des Stromes mit Grenzwerten.

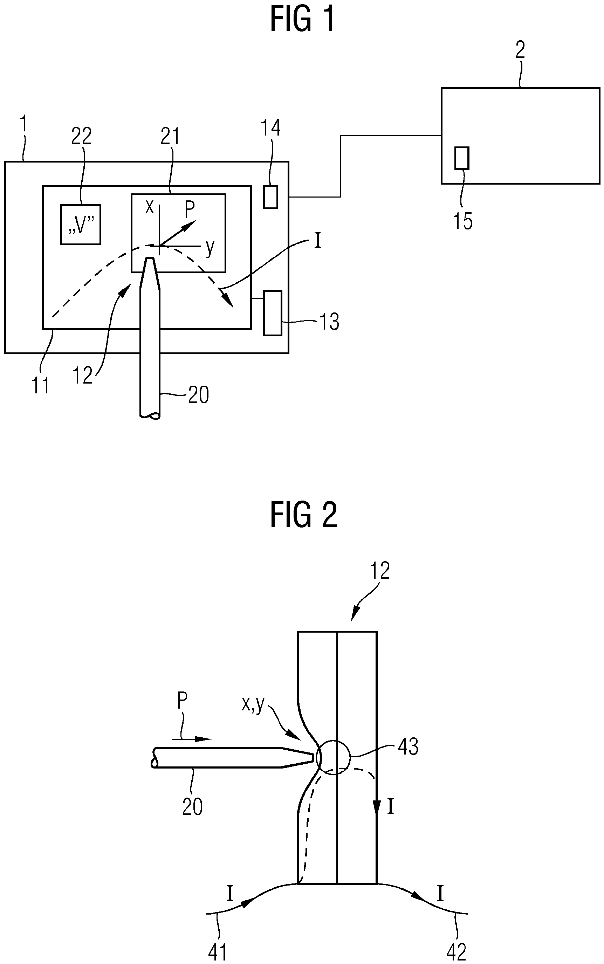

Gemäß FIG 1 ist ein Handsteuergerät 1 zur Steuerung einer industriellen Vorrichtung 2, umfassend ein berührungsempfindliches Bedien- und Beobachtungsgerät 11 mit einem Berührungssensor 12, dargestellt. Der Berührungssensor 12 ist dazu ausgestaltet eine Position x,y eines Bedienobjektes 20 zu erkennen.

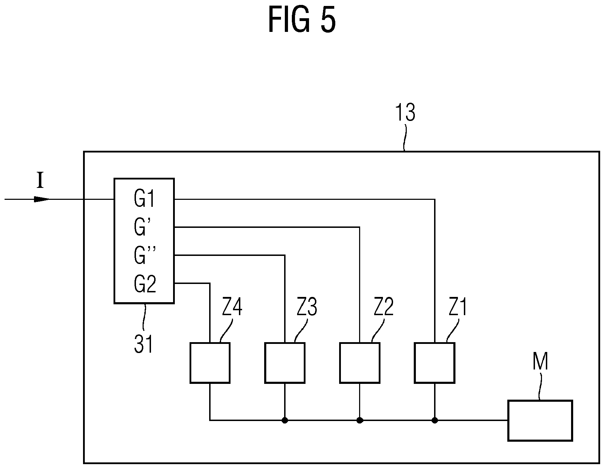

Durch das Bedienobjekt 20 wird an der Stelle x,y ein Druck p auf dem Berührungssensor 12 ausgeübt. Eine mit dem Berührungssensor 12 verbundene Auswerteeinheit 13 ist dazu ausgestaltet einen dem Druck p proportionalen Strom I zu messen. Weiterhin ist die Auswerteeinheit 13 dazu ausgestaltet den gemessenen Strom I mit einem ersten Grenzwert G1 zu vergleichen (siehe FIG 5).

Gemäß FIG 5 ist eine mögliche Ausgestaltung der Auswerteeinheit 13 dargestellt. Der Strom I fließt in einen Vergleicher 31, wobei in dem Vergleicher 31 ein erster Grenzwert G1 und ein zweiter Grenzwert G2 hinterlegt ist. Zwischen dem ersten Grenzwert G1 und dem zweiten Grenzwert G2 sind in dem Vergleicher 31 ein Zwischengrenzwert G′ und ein weiterer Zwischengrenzwert G″ hinterlegt. Überschreitet der Strom I den ersten Grenzwert G1 so wird über den Vergleicher 31 über einen Ausgang ein Zustandwert Z1 gesetzt. Entsprechend werden über weitere Ausgänge des Vergleichers 31 bei Überschreiten des Zwischengrenzwertes G′, bei Überschreiten des weiteren Zwischengrenzwertes G″ und bei Überschreiten des zweiten Grenzwertes G2 dementsprechend ein zweiter Zustandswert Z2, ein dritter Zustandswert Z3 bzw. ein vierter Zustandswert Z4 gesetzt.

Die Zustandswerte Z1,...,Z4 setzen ihrerseits wieder einen Merker M, welcher signalisiert, dass ein Zustandswechsel stattgefunden hat.

Bezogen auf FIG 1 verfügt das Handsteuergerät 1 über ein Anzeigefeld 22 in welchem ein Vorgabewert V angezeigt wird. Der Vorgabewert V lässt sich über das Bedienfeld 21 verstellen. Mittels einer in dem Handsteuergerät 1 angeordneten Sendeeinheit 14 kann der verstellte Vorgabewert V der Vorrichtung 2 mitgeteilt werden. Die Vorrichtung 2 empfängt den verstellten Vorgabewert V über eine Empfangseinheit 15.

Gemäß FIG 2 ist der Berührungssensor 12 beispielsweise als ein zweischichtiger resistiver Touch-Sensor dargestellt, wobei zusätzlich zu den herkömmlichen resistiven Touch-Sensoren zwischen einer ersten Schicht und einer zweiten Schicht ein elektrisch leitendes Verbundmaterial angeordnet ist. Der durch das Bedienobjekt 20 erzeugte Druck p drückt den Touch-Sensor an der Stelle x,y ein, wodurch das elektrisch leitende Verbundmaterial 43 gestaucht wird und seine elektrische Eigenschaft bezüglich seines Widerstandes dadurch geändert wird. Das elektrisch leitende Verbundmaterial 43 ist beispielsweise als ein druckempfindlicher Verbundwerkstoff ausgestaltet und kann beispielsweise in Silikon eingebettete Metallteilchen aufweisen. Dieses Silikon mit den Metallteilchen verändert unter mechanischem Druck kontinuierlich seine Leitfähigkeit von, in einem drucklosen Fall, einem Isolator zu einem, beispielsweise bei Maximaldruck, guten elektrischen Leiter.

Über eine an den Berührungssensor 12 angeschlossene erste Elektrode 41 kann der Strom I durch den Berührungssensor 12 über die Stelle des gestauchten elektrisch leitenden Verbundmaterials 43 fließen, wobei mit zunehmendem Druck p eine Stromstärke des Stromes I ebenfalls zunimmt. Diese Zunahme der Stromstärke I wird in der Auswerteeinheit 13 ausgewertet.

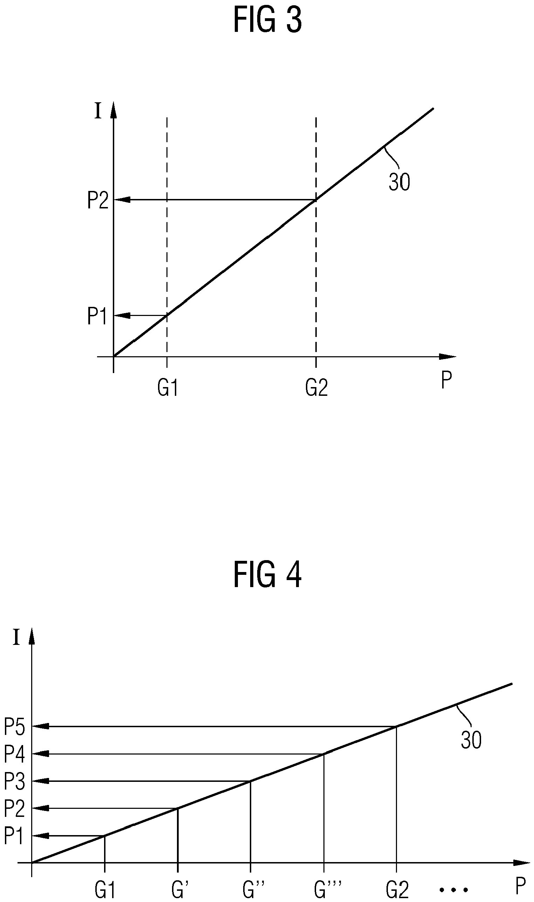

Gemäß FIG 3 und FIG 4 ist der Verlauf 30 der Stromstärke I dargestellt. Auf der x-Achse ist jeweils der Druck p und auf der y-Achse ist jeweils der Strom I aufgetragen. Bei zunehmenden Strom I wird zunächst ein erster Grenzwert G1 überschritten. Dem ersten Grenzwert G1 kann eine erste Pegelstufe P1 zugeordnet werden. Bei einer weiteren Druckerhöhung des Druckes p wird schließlich ein zweiter Grenzwert G2 überschritten, wobei diesem Grenzwert G2 eine zweite Pegelstufe P2 zugeordnet werden kann.

FIG 4 zeigt auf, dass es zwischen dem ersten Grenzwert G1 und dem zweiten Grenzwert G2 auch noch weitere Grenzwerte geben kann, wie z.B. einem Zwischengrenzwert G′, einem weiteren Zwischengrenzwert G″ und noch einem weiteren Zwischengrenzwert G‴. Den unterschiedlichen Grenzwerten können unterschiedliche Pegelstufen von einer ersten Pegelstufe P1 bis zu einer fünften Pegelstufe P5 zugeordnet werden.

Verfahrensgemäß könnte ein sicherheitsgerichtetes Bedienen mittels des Verfahrens wie folgt realisiert werden. Beim Druck auf das Bedienfeld 21 oder eine Schaltfläche für eine sicherheitskritische Aktion wertet ein Touch-Sensor die Druckstärke, beispielsweise eines Fingers, auf den Touch-Sensor aus. Nur wenn die Druckstärke bewusst zwei Pegelstufen passiert hat, wird eine die Sicherheit beeinflussende Aktion mittels eines Schaltbefehls ausgeführt. Will ein Bediener beispielsweise ein Förderband in einem Automatikbetrieb einschalten, so drückt der Bediener zunächst leicht auf die entsprechende Schaltfläche "Automatik ein". Nach einem Farbumschlag dieser Schaltfläche, beispielsweise nach einer Sekunde, drückt der Bediener stark auf dieselbe Schaltfläche. Erst nach dem Erkennen des starken Druckes schaltet sich das Förderband ein. Eine Sicherheitsbedingung ist dabei, dass die Auswerteeinheit 13 derart ausgestaltet ist, dass zunächst der schwache Druck erkannt werden muss damit darauf folgende das Erkennen des starken Druckes die Sicherheit beeinflussende Aktion auslösen darf. Dadurch ist gewährleistet, dass die Funktion nicht bereits ausgelöst wird, wenn versehentlich der Finger auf die Schaltfläche gekommen ist oder der Touch-Screen an dieser Stelle z.B. durch den Kontakt mit einem scharfen Gegenstand zerstört wurde oder beispielsweise ein Werkzeug, wie ein Schaufelstiel gegen den Touch-Screen gefallen ist.

**Patentansprüche**

**1.** Handsteuergerät (1) zur Steuerung einer industriellen Vorrichtung (2), umfassend ein berührungsempfindliches Bedien- und Beobachtungsgerät (11) mit einem Berührungssensor (12), wobei der Berührungssensor (12) dazu ausgestaltet ist eine Position (x,y) eines Bedienobjektes (20) auf dem Berührungssensor (12) zu erkennen, **dadurch gekennzeichnet, dass** der Berührungssensor (12) weiterhin dazu ausgestaltet ist zusätzlich zu der Position (x,y) einen Druck (p) des Bedienobjektes (20) auf den Berührungssensor (12) an dem Ort der Position (x,y) zu erkennen, wobei eine mit dem Berührungssensor (12) verbundene Auswerteeinheit (13) dazu ausgestaltet ist ein dem Druck (p) proportionalen Strom (I) zu messen, und weiterhin dazu ausgestaltet ist den gemessenen Strom (I) mit einem ersten Grenzwert (G1) zu vergleichen.

2.  Handsteuergerät (1) nach Anspruch 1, wobei die Auswerteeinheit (13) weiterhin dazu ausgestaltet ist den gemessenen Strom (I) mit einem zweiten Grenzwert (G2) zu vergleichen.

3.  Handsteuergerät (1) nach Anspruch 1 oder 2, wobei das berührungsempfindliche Bedien- und Beobachtungsgerät (11) ein Bedienfeld (21) aufweist, welches dazu ausgestaltet ist bei einer Berührung mit einem Druck (p) auf das Bedienobjekt (20), den Strom (I) an die Auswerteeinheit (13) weiter zuleiten und die Auswerteeinheit (13) weiterhin dazu ausgestaltet ist bei einem Strom (I), welcher unterhalb des ersten Grenzwertes (G1) liegt, einen in ein Anzeigefeld (22) angezeigten Vorgabewert (V) um eine erste Schrittweite zu erhöhen, und bei einem Strom (I), welcher oberhalb des ersten Grenzwertes (G1) liegt, den Vorgabewert (V) um eine zweite Schrittweite zu erhöhen.

4.  Verfahren zum Verändern eines Vorgabewertes (V), welcher in einem Anzeigefeld (22) eines berührungsempfindlichen Bedien- und Beobachtungsgerät (11) mit einem Berührungssensor (12) angezeigt wird, und über ein Bedienfeld (21) veränderbar ist, mit den Schritten:

    a) Prüfen, ob an einer Position (x,y) eine Berührung des Berührungssensors (12) mit einem Bedienobjekt (20) vorliegt, wobei die Position (x,y) im Wesentlichen mit Positionskoordinaten des Bedienfeld (21), welches auf dem berührungsempfindlichen Bedien- und Beobachtungsgerät (11) angezeigt wird, übereinstimmt,
    b) wenn eine Berührung mit dem Bedienobjekt (20) vorliegt, dann wird durch eine Strommessung ermittelt, wie stark der Druck (p) des Bedienobjektes (20) an der Position (x,y) auf das Bedienfeld (21) ist, wobei die Druckstärke einem Strom (I) proportional ist,
    c) Vergleichen des gemessenen Stromes (I) mit einem ersten Grenzwert (G1),
    d) bei Überschreiten des ersten Grenzwertes (G1) wird eine erste Aktion (A1) ausgelöst.

5.  Verfahren nach Anspruch 4, mit den weiteren Schritten:

    c1) Vergleichen des gemessenen Stromes mit einem zweiten Grenzwert (G2),
    d1) bei Überschreiten des zweiten Grenzwertes (G1) wird eine zweite Aktion (A2) ausgelöst.

6.  Verfahren nach Anspruch 5, wobei die Aktionen (A1,A2) sich auf die Veränderung des Vorgabewertes (V) unterschiedlich auswirken.

7.  Verfahren nach Anspruch 5 oder 6, wobei als Vorgabewert ein Prozesswert zum Steuern einer industriellen Vorrichtung (2) genutzt wird und die erste Aktion (A1) den Prozesswert mit einer ersten Schrittweite ändert und die zweite Aktion (A2) den Prozesswert mit einer zweiten Schrittweite ändert.

8.  Verfahren nach Anspruch 5 oder 6, wobei als Vorgabewert (V) ein die Sicherheit beeinflussender Schaltbefehl für die industrielle Vorrichtung (2) verwendet wird, wobei um den Schaltbefehl von ungültig auf gültig zu verändern zunächst das Bedienfeld (21) derart berührt wird, dass die erste Aktion (A1) ausgelöst wird und daraufhin das Bedienfeld (21) nochmals berührt wird und dabei zusätzlich der Druck (p) derart gesteigert wird, dass die zweite Aktion (A2) ausgelöst wird, wobei bei einem Vergleichen des gemessenen Stromes (I) mit dem zweiten Grenzwert (G2) ein Überschreiten des zweiten Grenzwertes (G2) erkannt wird und der Schaltbefehl auf gültig gesetzt wird.

9.  Verfahren nach Anspruch 7, wobei dem ersten Grenzwert (G1) ein Strom (I) zugeordnet wird, welcher einem minimal erkennbaren Druck (p) entspricht und dem zweiten Grenzwert (G2) ein Strom (I) zugeordnet wird, welcher einem maximal erkennbaren Druck (p) entspricht, wobei Druckwerte bzw. Stromwerte, welche zwischen dem minimalen Druck (p) und dem maximalen Druck (p) liegen normiert werden und mit den normierten Werten entsprechende Schrittweiten für die Veränderung des Vorgabewertes (V) bereitgestellt werden, welche zwischen der ersten und der zweiten Schrittweite liegen.

# FIG 1

# FIG 2

# FIG 3

# FIG 4

# FIG 5

**Europäisches Patentamt**
**European Patent Office**
**Office européen des brevets**

# EUROPÄISCHER RECHERCHENBERICHT

Nummer der Anmeldung

EP 12 15 5574

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/132456 A1 (ANSON DAVID L A [US] ANSON DAVID LEININGER ADOLPHSON [US]) 22. Juni 2006 (2006-06-22) * Absatz [0062] - Absatz [0068]; Abbildungen 6,7 * * Absatz [0050] - Absatz [0052] * ----- | 1-7,9 | INV. G06F3/048 G06F3/045 |
| X | WO 01/71478 A2 (SONY ELECTRONICS INC [US]) 27. September 2001 (2001-09-27) * Seite 21, Zeile 14 - Seite 23, Zeile 5; Abbildung 8 * ----- | 1-7,9 | |
| A | DE 10 2008 043515 A1 (ENDRESS & HAUSER WETZER GMBH [DE]) 12. Mai 2010 (2010-05-12) * Absatz [0001] - Absatz [0004]; Abbildung 1 * ----- | 1,4 | |
| A | EP 1 431 866 A1 (SIEMENS AG [DE]) 23. Juni 2004 (2004-06-23) * Absatz [0002]; Abbildung 2 * ----- | 1,4 | |
| A | US 2010/302177 A1 (KIM JONG HO [KR] ET AL) 2. Dezember 2010 (2010-12-02) * Abbildung 5 * ----- | 1,4 | RECHERCHIERTE SACHGEBIETE (IPC) G06F G05B |

~~Der vorliegende Recherchenbericht wurde für alle Patentans~~prüche erstellt

| Recherchenort | Abschlußdatum der Recherche | Prüfer |
|---|---|---|
| Berlin | 11. Juli 2012 | de Mateo Garcia, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

| | |
|---|---|
| Europäisches Patentamt | |
| European Patent Office | **Nummer der Anmeldung** |
| Office européen des brevets | EP 12 15 5574 |

---

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

---

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-7, 9

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**Europäisches Patentamt**
**European Patent Office**
**Office européen des brevets**

**MANGELNDE EINHEITLICHKEIT**
**DER ERFINDUNG**
**ERGÄNZUNGSBLATT B**

**Nummer der Anmeldung**

EP 12 15 5574

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-7, 9

   Variable Steuerung eines Vorgabewerts mit einem Handsteuergerät
   ---

2. Anspruch: 8

   Betriebssichere Betätigung eines Handsteuergeräts
   ---

**ANHANG ZUM EUROPÄISCHEN RECHERCHENBERICHT
ÜBER DIE EUROPÄISCHE PATENTANMELDUNG NR.**

EP 12 15 5574

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-07-2012

| Im Recherchenbericht angeführtes Patentdokument | Datum der Veröffentlichung | Mitglied(er) der Patentfamilie | Datum der Veröffentlichung |
|---|---|---|---|
| US 2006132456 A1 | 22-06-2006 | US 2006132456 A1<br>US 2010060606 A1 | 22-06-2006<br>11-03-2010 |
| WO 0171478 A2 | 27-09-2001 | AU 4595501 A<br>US 2001043198 A1<br>US 2004239649 A1<br>WO 0171478 A2 | 03-10-2001<br>22-11-2001<br>02-12-2004<br>27-09-2001 |
| DE 102008043515 A1 | 12-05-2010 | KEINE | |
| EP 1431866 A1 | 23-06-2004 | AT 354826 T<br>DE 10260305 A1<br>EP 1431866 A1<br>US 2004131361 A1 | 15-03-2007<br>15-07-2004<br>23-06-2004<br>08-07-2004 |
| US 2010302177 A1 | 02-12-2010 | KR 20100129424 A<br>US 2010302177 A1 | 09-12-2010<br>02-12-2010 |

EPO FORM P0461

Für nähere Einzelheiten zu diesem Anhang : siehe Amtsblatt des Europäischen Patentamts, Nr.12/82